# EUROPEAN PATENT SPECIFICATION

(11) **EP 1 642 202 B1**
(45) Date of publication and mention of the grant of the patent: **05.12.2012**
(21) Application number: 03738844.4
(22) Date of filing: 03.07.2003
(51) Int. Cl.: G06F 3/03, G06F 3/033

(54) **LOOP MEANS FOR POINTING DEVICES, EQUIPPED WITH FRICTION MATERIAL AND INTERMEDIATE FLEXING ZONES**
SCHLEIFENMITTEL FÜR ZEIGEGERÄTE, DIE MIT FRIKTIONSMATERIAL ZWISCHEN BIEGEZONEN AUSGESTATTET SIND
DISPOSITIF A BOUCLE POUR DISPOSITIFS DE POINTAGE PRESENTANT UN MATERIAU DE FROTTEMENT ET DES ZONES DE FLEXION INTERMEDIAIRES

(43) Date of publication of application: 05.04.2006
(73) Proprietor: Strömberg, Rolf, 175 65 Järfälla (SE)
(72) Inventor: Strömberg, Rolf, 175 65 Järfälla (SE)
(74) Representative: Johansson Webjörn, Ingmari
(86) International application number: PCT/SE2003/001160
(87) International publication number: WO 2005/003949

(56) References cited:
- WO-A1-02/06943
- DE-C1- 4 237 844
- US-A- 4 692 756
- US-A- 5 270 690

## Description

### TECHNICAL FIELD

### STATE OF THE ART

In PCT application PCT/SE01/01620 , published with number WO 02/06943 A1, by the author of the present patent application, a pointing device including a loop made of a flexible support material, which includes two rotatable and translatable rods that tighten the loop to an oval shape, is proposed. A firm support surface is situated under the plane upper part of the loop. The loop's surface is moved by the user and the loop's movement is detected whereby corresponding movement is achieved by the cursor on a computer screen.

In order to stiffen in the axial direction but keep flexibility in the tangential direction the loop can be supplied with a number of strips or stiffeners on the outside, arranged parallel in the loop's axial direction and with certain distances between them. This is an advantage when the loop moves fast in the axial direction as the loop's shape is easier to maintain.

When working with apparatus according to PCT application PCT/SE01/01620 it has been found better to arrange the strips on the inside of the loop. The advantage of this is that it is easy to choose materials for the strips such that low friction against the support surface is achieved. Further, the low friction strips on the underside of the support material prevent wearing it out since the support material never comes into contact with the support surface.

Despite this it has been hard to make such a device work perfectly. The reason has been that the support material's external surface has been evenly coated with a friction material, such as rubber, in order to enable good flexibility of the loop under the user's finger. The friction material in question should have a certain thickness because of wear and friction. If the friction material's thickness decreases under a certain value, the friction against the user's finger also decreases, whereby fast moves of the loop are made difficult as the user's finger tends to slide against the loop's exterior. Thus friction material with a certain minimum thickness, positioned on the support material's exterior, has been used. A disadvantage of this is that friction material such as rubber always has a certain "memory". Suppose the pointing device is unused for a time. Since the loop is stretched to an oval cross-section, the friction material, in combination with the cloth itself, tends to maintain its "resting position". In practice this "memory" can have the effect that the loop rotates by itself back to its resting position if the user has rotated it a little from this position and released it.

In a special embodiment of PCT application PCT/SE01/01 620 one of the translatable and rotatable rods is replaced by a firm rounded edge. Here problems with friction against the rounded edge are incurred, and the loop's tangential stiffness must therefore be very low so that the loop does not have too much friction against the edge. Since in this case the total friction cannot be kept as low as with embodiments with two rotatable rods, the friction on the outside of the loop against the user's fingers should be relatively high so that the user can move the loop easily. This makes a relatively thick layer of friction material necessary, but this works against the goal that the loop's tangential stiffness should be kept low. This makes it difficult to realise a loop that works well.

In US patent 4,692,756 by Clark a flexible loop stretched between two nested rounded edges on a support surface is shown. The loop can rotate over and slide along edges on the support surface. Also in this case there are the above problems when the loop glides and thereby has considerable friction against two firm rounded edges. Rubber material with considerable thickness on the loop's outside is therefore necessary, causing high stiffness and "memory".

Further, because of great freedom of choice of support material the loop's support material can advantageously be stamped out in the form of a rectangle that is joined together to form a cylinder. A disadvantage of this has been that the junctions have been exposed to wear by the user's fingers, whereby threads can come loose from the cloth's edge in the junctions which deteriorates their appearance. Further, the visible junctions in themselves can be negative from an aesthetic point of view. A device according to the present invention is intended to eliminate the above disadvantages. It shows how the loop can be made extremely flexible tangentially at the same time as thick friction material can be used. An additional advantage is that the support material's joint can be hidden entirely.

### SUMMARY OF THE INVENTION

The invention includes a loop means according to the appended claims. The loop may be in the form of a tangentially flexible cylinder for use preferably in conjunction with a pointing device of the type where the loop can be moved by the user in its axial direction and rotate over two parallel supports that tighten the loop. The loop may include a tangentially flexible support material, suitably thin fabric, with a number of low friction strips parallel to the loop means' longitudinal axis and arranged with separations. The friction material is essentially in the area outside and above the low friction strips. Great tangential flexibility of the loop is achieved since only little or no friction material is in the area between the low friction strips while at the same time the friction material above the low friction strips can be made arbitrarily thick for the best friction and wear characteristics.

### BRIEF DESCRIPTION OF THE FIGURES

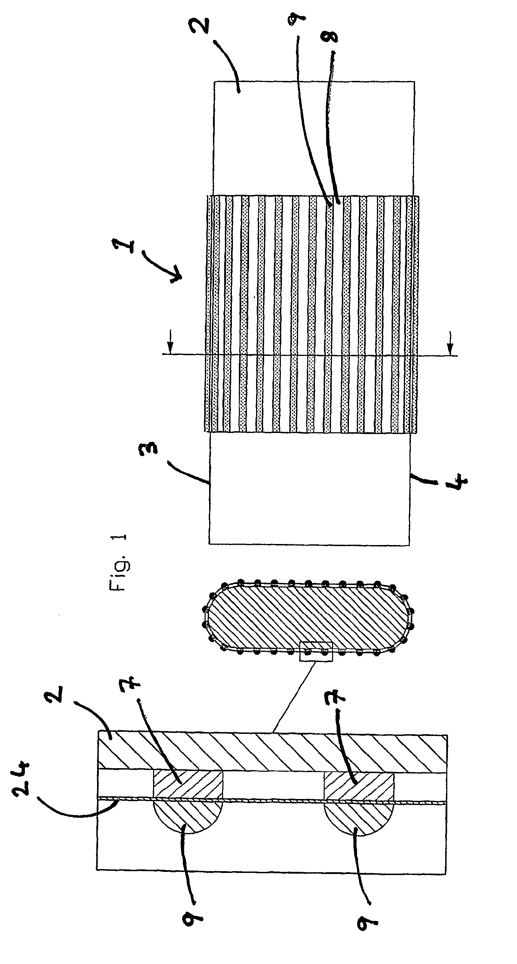

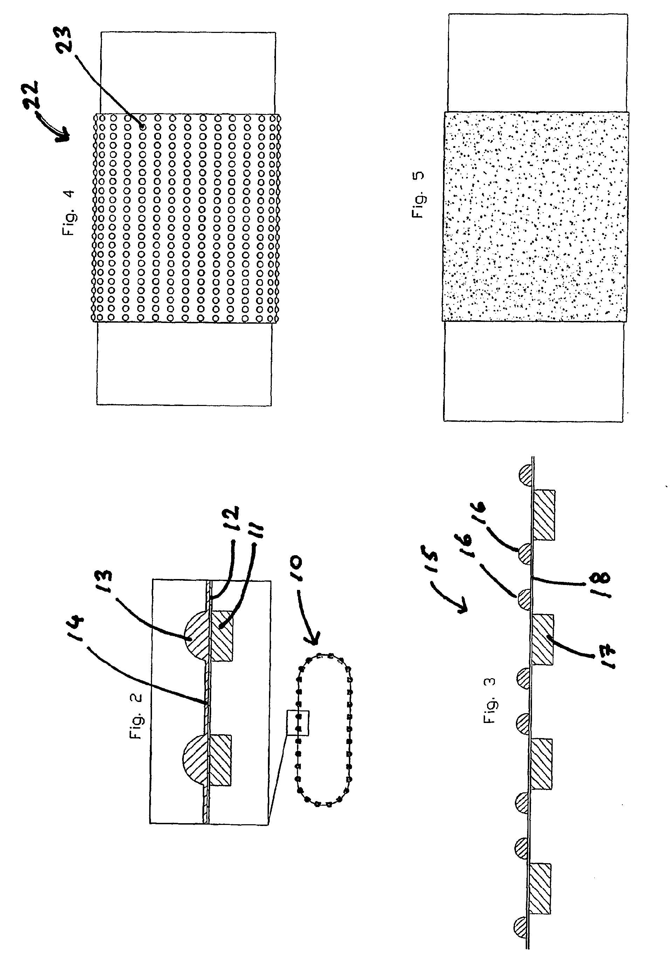

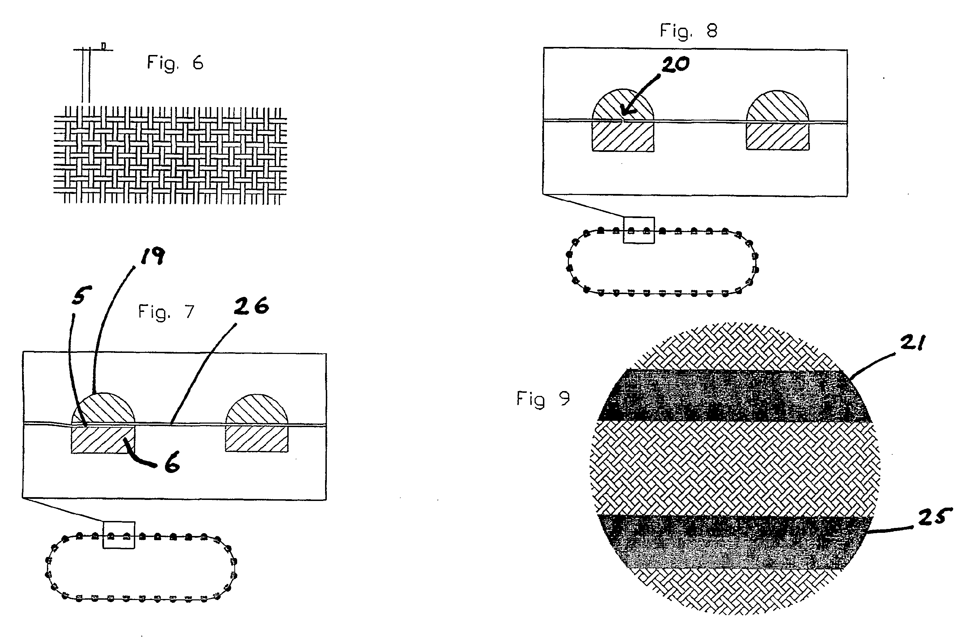

Figure 1 shows a preferred embodiment of the invention in top view and section view with an enlarged section, figure 2 shows a modification, figure 3 shows an additional modification, figure 4 shows friction material arranged point by point, figure 5 shows friction material arranged irregularly point by point, figure 6 shows Georgette-cloth in magnification, figure 7 shows an overlap junction, figure 8 shows a joint edge-to-edge and figure 9 shows an enlarged cut-out circular piece of fabric including two low friction strips with the individual threads angled at 45 degrees to the low friction strips.

### DETAILED DESCRIPTION OF EMBODIMENTS

Figure 1 shows a preferred embodiment. A loop 1 including thin fabric 24 encloses a support surface 2 provided with rounded edges 3 and 4 on its sides. The loop 1 can move axially along the rounded edges 3 and 4 and rotate around them. On the inside the loop 1 is provided with longitudinal, axially arranged low friction strips 7 made of some relatively stiff material, e.g. polyester plastic, that provides low friction against the support surface 2 with the rounded edges 3 and 4. Friction material of considerable thickness is arranged on the outside of the cloth 24, but only in the area above the low friction strips 7 in the form of strips 9. Since no friction material is in the area 8 between the strips 9, extreme flexibility of the loop 1 is achieved seen tangentially, and since the friction strips 9 have considerable thickness (1 millimetre worked well in a prototype), high friction against the user's finger is achieved at the same time as a good margin against wearing down the friction material is achieved.

Now reference is made to figure 2 where an end view of a loop 10 is shown. The loop 10 is made of a support material 12 and it is provided with longitudinal low friction strips 11 on the inside. Friction material 1 in the form of strips 13 with considerable thickness is arranged outside the support material 12 in the area outside the low friction strips 11. The difference compared to the embodiment shown in figure 1 is that there is also a thin layer 14 of friction material on the outside of the support material 12 in the area between the low friction strips 11. However, the thickness of the friction material 14 in the area between the low friction strips 11 is significantly less than that in the area above the low friction strips 11. The loop's tangential flexibility is thus maintained to a great extent.

In an additional embodiment shown in figure 3 a loop 15 is provided with friction material arranged in the form of strips 16, but not in the area above, but rather outside, the low friction strips 17. However, zones 18 are left that lack friction material. The zones 18 enable good tangential flexibility of the loop 15.

An embodiment shown in figure 4 illustrates the fact that friction material need not be arranged in continuous strips. A loop 22 is shown, on the inside provided with stiff low friction strips (not shown). On the upper side of the low friction strips and on the outside of the loop 22 friction material is arranged in small islands 23 arranged in rows.

Friction material can also be arranged in spots in a more or less irregular pattern and even in a random pattern which is shown in figure 5. It is actually true that material arranged in spots with considerable space between them is better than an evenly distributed layer of friction material because there is still uncoated support material between the strips that can flex between the spots of friction material.

Quite generally, however, it is an advantage for the greatest tangential flexibility of the loop that there are zones with significantly less friction material on the average in the area between the low friction strips.

In practice it is very suitable to use a fabric with a distance D between the individual threads, see figure 6. Great flexibility is achieved with the cloth and an optical detector type HDNS2000 (with "aperture" 0.8 millimetre) detects such a fabric very well if D<0.5 holds. A so called Georgette-cloth has these characteristics. D can be chosen larger, of course.

An overlap junction is shown in figure 7. The support material 26 is cut in rectangular shape whereupon it is glued together to form a cylinder with overlap joint 5. The overlap joint 5 is situated between one of the low friction strips 6 and one of the friction strips 19. In this way the junction is entirely hidden 5. There is an additional advantage. Normally an overlap junction would give rise to local increased tangential stiffness since the support material is double at the overlap joint. However, since the overlap joint is situated over one of the low friction strips the loop's tangential stiffness is not increased.

Figure 8 shows a similar joint 20, but the support material is arranged edge-to-edge here. Also here the junction is hidden.

Figure 9 shows a preferred shape for arranging the individual threads in the loop's fabric. Here the threads make a 45 degree angle to the strips 21 and 25, which gives good form stability to the loop when it moves sideways. Of course another angle can be chosen.

In all the above shown embodiments the support material can contain a flexible material such as silicone rubber for protection against penetration of moisture and impurities into and behind the support material. In practice a support material in the form of fabric is impregnated with liquid rubber that later solidifies.

In case a detector of type HDNS 2000 is used, presently sold by Agilent, that detects the motion of the outside of the loop means, it has been found advantageous to use a transparent friction material and fill it with relatively sparsely positioned reflecting particles. The particles improve the detection of the loop's movement. Detection becomes more effective if the particles are relatively large and have distances between them so that individual points of light are projected toward the detector's chip.

Many modifications can be made within the limits of the patent claims.

## Claims

1. A loop means (1,10,22) for pointing devices for guiding a cursor on a computer screen or the like in the form of a cylinder that can be moved in its axial direction, and rotate around a support surface, the loop means including a flexible support material (12,24,26) having a number of mutually spaced strips essentially parallel to the longitudinal axis of the loop means (1,10,22) for stiffening the loop means in its axial direction, wherein **characterised in that** the flexible support material (12,24,26) consists of thin fabric, **characterised in that** the number of mutually spaced strips (6,7,11,17) consists of low friction material arranged on the inside of the loop means (1,10,22) and **in that** friction material (9,13,16,19) of considerable thickness is arranged on the outside of the flexible support material (12,24,26), essentially in the area outside and above the low friction strips (6,7,11,17) and little or no friction material is arranged in the area between the low friction strips (6,7,11,17).

2. The loop means (1,10,22) according to claim 1, wherein the friction material (9, 13, 16,19) is arranged in the form of friction strips and wherein longitudinal zones (8,18) with less than average concentration of friction material are arranged between the friction strips (9,13,16,19) with less than average concentration of friction material.

3. The loop means (1,10,22) according to claim 1 or 2, wherein the flexible support material is of a rectangular shape and is joined together to form a cylinder, whereby at least a portion of the joint is situated over one of the low friction strips (6,7,11,17).

4. The loop means (1,10,22) according to any of the previous claims, wherein the flexible support material (12, 24, 26) is of a rectangular shape and composed of threads, the individual threads being arranged at an angle of at least 20 and at most 70 degrees to the low friction strips (6,7,11,17).

5. The loop means (1,10,22) according to any of the previous claims, the cloth wherein the flexible support material (12,2426) is made of cloth or fabric composed of threads, or fabric having a distance D between the individual threads, where D is larger than 0.05 millimetre on the average.

6. The loop means (1,10,22) according to any of the previous claims, wherein the flexible support material (12,24,26) is made of cloth or fabric, the cloth or fabric being of the Georgette type.

7. The loop means (1,10,22) according to any of the previous claims, the friction material contains reflecting particles that are separated sufficiently to give rise to individual light points on a detector chip of an optical detector such as a HDNS 2000 or the like.

## Patentansprüche

1. Schleifeneinrichtung (1, 10, 22) für Zeigevorrichtungen zum Führen eines Cursors auf einem Computerbildschirm oder dergleichen in Gestalt eines Zylinders, der in seiner axialen Richtung bewegt werden kann und sich um eine Trägerfläche dreht, wobei die Schleifeneinrichtung ein flexibles Trägermaterial (12, 24, 26) umfasst, das eine Anzahl gegenseitig beabstandeter Streifen beinhaltet, die im wesentlichen parallel zu der Längsachse der Schleifeneinrichtung (1, 10, 22) sind, um die Schleifeneinrichtung in ihrer axialen Richtung auszusteifen wobei das flexible Trägermaterial (12, 24, 26) aus einem dünnen Gewebe besteht,
**dadurch gekennzeichnet, dass**
die Anzahl gegenseitig beabstandeter Streifen (6, 7, 11, 17) aus einem Material geringer Reibung besteht, das auf der Innenseite der Schleifeneinrichtung (1, 10, 22) angeordnet ist, und
ein Reibungsmaterial (9, 13, 16, 19) einer beträchtlichen Dicke auf der Außenseite des flexiblen Trägermaterials (12, 24, 26) im wesentlichen in dem Bereich außerhalb und über den Streifen (6, 7, 11, 17) geringer Reibung angeordnet ist und ein Material geringer oder keiner Reibung in einem Bereich zwischen den Streifen (6, 7, 11, 17) geringer Reibung angeordnet ist.

2. Schleifeneinrichtung (1, 10, 22) nach Anspruch 1, bei der das Reibungsmaterial (9, 13, 16, 19) in Gestalt von Reibungsstreifen angeordnet ist und längliche Zonen (8, 18) mit einer geringeren als der durchschnittlichen Konzentration eines Reibungsmaterials zwischen den Reibungsstreifen angeordnet sind.

3. Schleifeneinrichtung (1, 10, 22) nach Anspruch 1 oder 2, bei dem das flexible Trägermaterial eine rechteckige Form hat und miteinander verbunden ist, um einen Zylinder zu bilden, wobei sich wenigstens ein Abschnitt der Verbindung über einem der Streifen (6, 7, 11, 17) geringer Reibung befindet.

4. Schleifeneinrichtung (1, 10, 22) nach einem der vorhergehenden Ansprüche, bei der das flexible Trägermaterial (12, 24, 26) eine rechteckige Form hat und aus Fasern besteht, wobei die einzelnen Fasern in einem Winkel von wenigstens 20 und höchstens 70 Grad zu den Streifen (6, 7, 11, 17) geringer Reibung angeordnet sind.

5. Schleifeneinrichtung (1, 10, 22) nach einem der vorhergehenden Ansprüche, bei der das flexible Trägermaterial (12, 24, 26) aus einem Tuch oder Gewebe, bestehend aus Fasern, besteht, wobei das Tuch oder Gewebe einen Abstand D zwischen den einzelnen Fasern hat und D im Durchschnitt größer als 0,05 mm ist.

6. Schleifeneinrichtung (1, 10, 22) nach einem der vorhergehenden Ansprüche, bei der das flexible Trägermaterial (12, 24, 26) aus einem Tuch oder Gewebe besteht, wobei das Tuch oder Gewebe von dem Georgette-Typ ist.

7. Schleifeneinrichtung (1, 10, 22) nach einem der vorhergehenden Ansprüche, bei der das Reibungsmaterial reflektierende Partikel enthält, die ausreichend beabstandet sind, um einzelne Lichtpunkte auf einem Detektorchip eines optischen Detektors, wie etwa eines HDNS 2000 oder dergleichen, zu erzeugen.

## Revendications

1. Moyen à boucle (1, 10, 22) pour dispositifs de pointage servant à guider un curseur sur un écran d'ordinateur ou similaire se présentant sous la forme d'un cylindre qui peut être déplacé dans sa direction axiale, et tourner autour d'une surface de support, le moyen à boucle comprenant un matériau de support flexible (12, 24, 26) ayant un certain nombre de bandes mutuellement espacées essentiellement parallèles à l'axe longitudinal du moyen à boucle (1, 10, 22) pour renforcer le moyen à boucle dans sa direction axiale, dans lequel le matériau de support flexible (12, 24, 26) se compose d'un tissu mince,
**caractérisé en ce que**
les bandes mutuellement espacées (6, 7, 11, 17) se composent d'un matériau à faible coefficient de frottement agencé sur l'intérieur du moyen à boucle (1, 10, 22) et **en ce que**
un matériau de frottement (9, 13, 16, 19) d'épaisseur considérable est agencé sur l'extérieur du matériau de support flexible (12, 24, 26), essentiellement dans la région située à l'extérieur des bandes à faible coefficient de frottement (6, 7, 11, 17) et au-dessus de celles-ci et peu ou pas de matériau de frottement est agencé dans la région située entre les bandes à faible coefficient de frottement (6, 7, 11, 17).

2. Moyen à boucle (1, 10, 22) selon la revendication 1, dans lequel le matériau de frottement (9, 13, 16, 19) est agencé sous la forme de bandes de frottement et dans lequel des zones longitudinales (8, 18) sont agencées entre les bandes de frottement (9, 13, 16, 19) avec moins que la concentration moyenne de matériau de frottement.

3. Moyen à boucle (1, 10, 22) selon la revendication 1 ou 2, dans lequel le matériau de support flexible est de forme rectangulaire et est relié ensemble pour former un cylindre, moyennant quoi au moins une partie du raccord se situe sur l'une des bandes à faible coefficient de frottement (6, 7, 11, 17).

4. Moyen à boucle (1, 10, 22) selon l'une quelconque des revendications précédentes, dans lequel le matériau de support flexible (12, 24, 26) est de forme rectangulaire et se compose de fils, les fils individuels étant agencés selon un angle d'au moins 20 degrés et d'au maximum 70 degrés par rapport aux bandes à faible coefficient de frottement (6, 7, 11, 17).

5. Moyen à boucle (1, 10, 22) selon l'une quelconque des revendications précédentes, dans lequel le matériau de support flexible (12, 24, 26) est constitué de toile ou de tissu se composant de fils, la toile ou le tissu ayant une distance D entre les fils individuels, D étant supérieure à 0,05 millimètre en moyenne.

6. Moyen à boucle (1, 10, 22) selon l'une quelconque des revendications précédentes, dans lequel le matériau de support flexible (12, 24, 26) est constitué de toile ou de tissu, la toile ou le tissu étant du type Georgette.

7. Moyen à boucle (1, 10, 22) selon l'une quelconque des revendications précédentes, dans lequel le matériau de frottement contient des particules réfléchissantes qui sont suffisamment séparées pour donner lieu à des points lumineux individuels sur une puce de détention d'un détecteur optique tel qu'un détecteur de type HDNS 2000 ou similaire.
